# EUROPÄISCHE PATENTANMELDUNG

(11) **EP 4 641 896 A1**
(43) Veröffentlichungstag der Anmeldung: **29.10.2025**
(21) Anmeldenummer: 25171557.9
(22) Anmeldetag: 22.04.2025
(51) Int. Cl.: H02K 15/16, H02K 15/50

(54) **VORRICHTUNG ZUR DEMONTAGE EINES ELEKTROMOTORS**

(30) Priorität: 23.04.2024 DE 202024102036 U
(71) Anmelder: GEDORE Holding GmbH, 42899 Remscheid (DE)
(72) Erfinder: HEIZMANN, Florian Sebastian, 79871 Eisenbach (DE)
(74) Vertreter: Brinkmann & Partner

(57) **Zusammenfassung**

Die Erfindung betrifft eine Vorrichtung zur Demontage eines einen Rotor und einen Stator aufweisenden Elektromotors, mit einer ersten Fixiereinrichtung (6) für den Rotor (4), die ein erstes Zentrierelement (8) und ein zweites Zentrierelement (9) aufweist, wobei die Zentrierelemente (8, 9) unter Ausbildung eines Aufnahmeraums (12) zur Aufnahme des Rotors (4) in Längsausrichtung einander gegenüberliegend angeordnet und dazu eingerichtet sind, den Rotor (4) positionssicher zwischen sich aufzunehmen, und mit einer zweiten Fixiereinrichtung (7) für den Stator (3), die eine Statoraufnahme (13) und Befestigungsmittel (14) zur Positionssicherung des Stators (3) relativ zur Statoraufnahme (13) aufweist, wobei die Statoraufnahme (13) in Relation zur ersten Fixiereinrichtung (6) in Höhenrichtung (29) eines Gestells (16) und somit in Rotorlängsrichtung (5) translatorisch bewegbar ausgebildet ist.

## Beschreibung

Die Erfindung betrifft eine Vorrichtung zur Demontage eines einen Rotor und einen Stator aufweisenden Elektromotors. Die Erfindung betrifft ferner eine Justiereinrichtung für eine Vorrichtung zur Demontage eines einen Rotor und einen Stator aufweisenden Elektromotors, die zwischen einer Fixiereinrichtung und einem Gestell der Vorrichtung, insbesondere am Gestell befestigbar ist.

Ein Elektromotor verfügt über eine unbewegliche Baugruppe, den sogenannten Stator, einerseits und über eine sich im bestimmungsgemäßen Betriebsfall bewegende Baugruppe, den sogenannten Rotor, andererseits. Gemäß einer typischen Bauform kann der Elektromotor als sogenannter Innenläufermotor ausgebildet sein, gemäß welcher Bauform vorgesehen ist, dass der Rotor als innenliegende Baugruppe vom Stator umgeben ist. Dabei ist der Stator unter Belassung eines Ringspalts von 1 mm oder weniger vom Rotor beabstandet.

Zwecks drehbarer Anordnung des Rotors kommen entsprechende Rotorlager zum Einsatz. Auch im bestimmungsgemäßen Betrieb verschleißen diese Rotorlager mit der Zeit, womit die Lebensdauer des Elektromotors entsprechend begrenzt ist. Insbesondere Elektromotoren von Elektrofahrzeugen haben aufgrund verschleißender Rotorlager zumeist eine Lebensdauer von nur wenigen 10.000 Fahrkilometern, beispielsweise von nur 40.000 Fahrkilometern oder weniger. In der Praxis wird im Falle eines Lagerschadens der gesamte Elektromotor ausgetauscht. Dies ist in nachteiliger Weise sehr kostenaufwändig.

Aus Kostengründen ist es bevorzugt, einen Lagertausch anstelle eines kompletten Motorwechsels vorzunehmen. Ein solcher Lagertausch ist allerdings in nachteiliger Weise schwierig durchzuführen und deshalb aufwändig. Dies deshalb, weil es für einen Lagertausch erforderlich ist, Stator und Rotor zu demontieren, wobei darauf zu achten ist, dass sich Stator und Rotor nicht berühren. Es besteht ansonsten die Gefahr einer irreversiblen Beschädigung von Stator und/oder Rotor. Da das Spaltmaß zwischen Stator und Rotor mit zumeist weniger als 1 mm eng bemessen ist, bedarf es einer entsprechenden Führung, um eine berührungslose Demontage von Stator und Rotor gewährleisten zu können.

Aus dem Stand der Technik sind in diesem Zusammenhang sogenannte Führungsringe bekannt geworden, die vor einer Demontage rotor- und statorseitig anzubringen sind. Derartige Führungsringe offenbart beispielsweise die EP 2 299 560 A1.

Im endmontierten Zustand stehen die aus der EP 2 299 560 A1 vorbekannten Führungsringe radial vor, wodurch der Spaltraum zwischen Stator und Rotor ausgefüllt ist. Dabei sind vorzugsweise sowohl statorseitig als auch rotorseitig jeweils zwei Führungsringe vorgesehen, die im Montage- bzw. Demontagefall Kontaktflächen bereitstellen, womit eine direkte Berührung von Rotor und Stator ausgeschlossen ist.

Obgleich sich der Einsatz vorbekannter Führungsringe im alltäglichen Praxiseinsatz bewährt hat, besteht Verbesserungsbedarf. Zwar mag der Einsatz vorbekannter Führungsringe einen Kontakt von Stator und Rotor im Montage- bzw. Demontagefall vermeiden helfen, doch insbesondere die Anbringung der rotorseitigen Führungsringe am Rotor ist zeitlich sehr aufwändig und je nach Bauform von Rotor und/oder Stator unter Umständen aufgrund mangelnder Zugänglichkeit auch gar nicht möglich. Von Nachteil ist des Weiteren, dass die im Verwendungsfall zum Einsatz kommenden Führungsringe in ihrer geometrischen Ausgestaltung auf das Spaltmaß zwischen Rotor und Stator abgestimmt sein müssen. Es ist deshalb erforderlich, eine Vielzahl von in ihren geometrischen Abmessungen unterschiedlich ausgebildete Führungsringe vorzuhalten, die je nach zu montierendem bzw. zu demontierendem Elektromotor zum Einsatz kommen. Insofern ist die vorbekannte Konstruktion auch logistisch aufwändig und anfällig für Fehlbedienungen.

Es ist ausgehend vom Vorbeschriebenen die **Aufgabe** der Erfindung, eine Vorrichtung bzw. eine Justiereinrichtung der eingangs genannten Art konstruktiv dahingehend weiterzuentwickeln, dass bei gleichzeitiger Sicherstellung einer Kontaktvermeidung eine vereinfachte Montage bzw. Demontage von Stator und Rotor ermöglicht ist.

Zur **Lösung** dieser Aufgabe wird mit der Erfindung vorgeschlagen eine Vorrichtung zur Demontage eines einen Rotor und einen Stator aufweisenden Elektromotors, mit einer ersten Fixiereinrichtung für den Rotor, die ein erstes Zentrierelement und ein zweites Zentrierelement aufweist, wobei die Zentrierelemente unter Ausbildung eines Aufnahmeraums zur Aufnahme des Rotors in Längsausrichtung einander gegenüberliegend angeordnet und dazu eingerichtet sind, den Rotor positionssicher zwischen sich aufzunehmen, und mit einer zweiten Fixiereinrichtung für den Stator, die eine Statoraufnahme und Befestigungsmittel zur Positionssicherung des Stators relativ zur Statoraufnahme aufweist, wobei die Statoraufnahme in Relation zur ersten Fixiereinrichtung in Höhenrichtung eines Gestells und somit in Rotorlängsrichtung translatorisch bewegbar ausgebildet ist.

Die erfindungsgemäße Vorrichtung verfügt über zwei Fixiereinrichtungen, nämlich eine erste Fixiereinrichtung für den Rotor und eine zweite Fixiereinrichtung für den Stator. Dabei dienen die Fixiereinrichtungen jeweils dazu, den Rotor bzw. den Stator positionssicher zu halten. Dies ermöglicht eine Demontage von Rotor und Stator, wobei durch die jeweilige Fixierung von Rotor und Stator durch die dafür vorgesehenen Fixiereinrichtungen sichergestellt ist, dass sich Rotor und Stator bei einer Demontage bzw. einer späteren Montage nicht berühren.

Die erste Fixiereinrichtung für den Rotor verfügt über ein erstes Zentrierelement und ein zweites Zentrierelement. Diese beiden Zentrierelemente sind unter Ausbildung eines Aufnahmeraums zur Aufnahme des Rotors in Längsausrichtung einander gegenüberliegend angeordnet. Im bestimmungsgemäßen Demontagefall klemmen die beiden Zentrierelemente den Rotor zwischen sich ein, d. h. der Rotor befindet sich von den beiden Zentrierelementen eingeklemmt im Aufnahmeraum, der zwischen den beiden Zentrierelementen aufgrund ihrer Beabstandung ausgebildet ist.

Die Zentrierelemente sind dazu eingerichtet, den Rotor positionssicher zwischen sich aufzunehmen und zu halten. Im Montage- bzw. Demontagefall ist der Rotor längsausgerichtet zwischen den beiden Zentrierelementen angeordnet, d. h. das eine Zentrierelement wirkt einendseitig mit dem Rotor zusammen und das andere Zentrierelement anderendseitig. Die beiden Zentrierelemente klemmen den Rotor mithin nach Art eines Schraubstockes zwischen sich ein.

Die zweite Fixiereinrichtung dient einer Positionssicherung des Stators. Zu diesem Zweck verfügt die zweite Fixiereinrichtung über eine Statoraufnahme einerseits und Befestigungsmittel zur Positionssicherung des Stators relativ zur Statoraufnahme andererseits. Im Montage- bzw. Demontagefall ist der Stator mithin durch die Statoraufnahme gehalten und mittels der Befestigungsmittel an der Statoraufnahme positionssicher angeordnet. Befestigungsmittel in diesem Sinne können beispielsweise Schrauben, Klemmbacken, Spannpratzen und/oder dergleichen sein.

Mittels der beiden erfindungsgemäß vorgesehenen Fixiereinrichtungen ist im Montage- bzw. Demontagefall sichergestellt, dass sowohl der Rotor als auch der Stator jeweils positionssicher gehalten sind, und zwar unabhängig voneinander.

Erfindungsgemäß ist ferner vorgesehen, dass die Statoraufnahme in Relation zur ersten Fixiereinrichtung in Rotorlängsrichtung translatorisch bewegbar ausgebildet ist. Hierdurch ist es ermöglicht, den für sich positionssicher gehaltenen Stator verfahren zu können, und zwar relativ zur ersten Fixiereinrichtung, mittels welcher der Rotor für sich positionssicher gehalten ist. Im Ergebnis kann so der Stator verfahren werden, und zwar relativ gegenüber dem Rotor, wobei aufgrund der jeweiligen Positionssicherung gewährleistet ist, dass sich Rotor und Stator nicht berühren können.

Mit der erfindungsgemäßen Vorrichtung wird zwecks Statorbewegung nur ein Freiheitsgrad ermöglicht, und zwar in Rotorlängsrichtung. Eine quer hierzu gerichtete Bewegung von Stator und/oder Rotor ist aufgrund der Lagefixierung von Stator und Rotor nicht möglich, womit unter Beibehaltung des Spaltmaßes zwischen Rotor und Stator ein Abziehen des Stators vom Rotor ermöglicht ist, mithin eine Relativbewegung des Stators zum Rotor in Rotorlängsrichtung.

Zwecks Demontage ermöglicht die erfindungsgemäße Vorrichtung eine Verfahrensdurchführung wie folgt. Der zu demontierende Elektromotor wird in der Vorrichtung positioniert, und zwar im Aufnahmeraum zwischen den beiden Zentrierelementen. Dabei ist der Elektromotor in Längsrichtung des Rotors ausgerichtet, d. h. so, dass sich der Rotor in Längsausrichtung zwischen den beiden Zentrierelementen befindet. Alsdann werden die beiden Zentrierelemente relativ zueinander verfahren, sodass der Rotor zwischen den beiden Zentrierelementen nach Art eines Schraubstockes eingeklemmt wird. Schlussendlich ist der Rotor am Ende dieses Verfahrensschrittes zwischen den beiden Zentrierelementen positionssicher gehalten. In einem weiteren Verfahrensschritt wird alsdann der Stator positionssicher fixiert. Zu diesem Zweck dienen entsprechende Befestigungselemente, mittels denen der Stator auf der Statoraufnahme befestigt wird. Der in die Vorrichtung eingebrachte Elektromotor ist mithin hinsichtlich seiner beiden Baugruppen Stator und Rotor jeweils positionssicher fixiert bzw. gehalten.

Alsdann sind etwaige Verkleidungsteile, Deckel und/oder dergleichen des Elektromotors zu lösen und zu entfernen. Sobald dies geschehen ist, wird in einem weiteren Verfahrensschritt die den Stator tragende Statoraufnahme translatorisch verfahren, und zwar in Relation zu der den Rotor fixierenden Fixiereinrichtung. Die Verfahrbewegung erfolgt ausschließlich in Rotorlängsrichtung. Hierdurch werden Rotor und Stator voneinander gelöst, ohne dass die Gefahr eines Kontaktes zwischen Rotor und Stator besteht. Denn aufgrund der jeweiligen Fixierung von Rotor einerseits und Stator andererseits, wird das bestehende Spaltmaß zwischen Rotor und Stator aufrechterhalten.

Sobald der Rotor und der Stator voneinander getrennt sind, kann ein Lagerwechsel stattfinden. Alsdann werden Stator und Rotor in umgekehrter Reihenfolge wieder miteinander verbunden, d. h. der Elektromotor wird montiert.

Die erfindungsgemäße Vorrichtung erlaubt in denkbar einfacher Weise einen Lageraustausch. Es ist lediglich erforderlich, einen zu demontierenden Elektromotor in die erfindungsgemäße Vorrichtung einzubringen und in vorbeschriebener Weise sowohl den Rotor als auch den Stator jeweils in der Lage zu sichern. Es kann dann eine Demontage stattfinden, ohne dass es zusätzlicher Führungselemente bedarf, wobei gleichwohl sichergestellt ist, dass eine Berührung von Stator und Rotor während einer Montage bzw. Demontage sicher unterbleibt. Es sind im Unterschied zum Stand der Technik insbesondere keine Führungsringe erforderlich. Damit einhergehend bedarf es auch keiner Vorhaltung einer Vielzahl von geometrisch unterschiedlich ausgebildeten Führungsringen und/oder einer Montage bzw. Demontage solcher Führungsringe.

Die erfindungsgemäße Vorrichtung kann in vorteilhafter Weise für eine Vielzahl von geometrisch unterschiedlich ausgebildeten Elektromotoren gleichermaßen eingesetzt werden. Das bestehende Spaltmaß zwischen Rotor und Stator ist für eine bestimmungsgemäße Verwendung der erfindungsgemäßen Vorrichtung unerheblich. Denn aufgrund der erfindungsgemäß vorgesehenen Fixiereinrichtungen findet unabhängig vom bestehenden Spaltmaß eine Lagefixierung von Rotor einerseits und Stator andererseits statt. Da der Rotor und der Stator aufgrund dieser Fixiereinrichtungen sicher in Lage gehalten werden, kann unabhängig vom bestehenden Spaltmaß eine Trennung von Rotor und Stator erfolgen, ohne dass die Gefahr einer Berührung besteht. Die erfindungsgemäße Vorrichtung ist mithin vielseitig einsetzbar, ohne dass es mit Bezug auf geometrische Ausgestaltungen des Elektromotors einer Umrüstung der Vorrichtung bedarf.

Im Ergebnis gestattet die erfindungsgemäße Vorrichtung ein einfaches und schnell durchzuführendes Demontieren eines Elektromotors, sodass im Falle eines Lagerschadens in einfacher Weise ein Lagertausch stattfinden kann. Die erfindungsgemäße Vorrichtung stellt mithin eine kostengünstige Alternative zur Verfügung, Lagerschäden durch Lageraustausch zu beheben, womit auch ein kostspieliger Elektromotorwechsel entfällt.

Gemäß einem weiteren Merkmal der Erfindung ist ein Gestell vorgesehen, das die beiden Zentrierelemente gegenüber einander abstützt.

Für eine lagesichere Positionierung des Rotors ist es erforderlich, dass die beiden den Rotor zwischen sich einklemmenden Zentrierelemente im Montage- bzw. Demontagefall möglichst spielfrei ihre jeweilige Position sicher halten. Um dies zu gewährleisten, ist ein Gestell vorgesehen, das die beiden Zentrierelemente gegenüber einander abstützt. Mittels des Gestells werden also die beiden Zentrierelemente jeweils auch unter Kraftbeaufschlagung im Klemmfall in ihrer relativen Lage zueinander abgestützt, wozu das Gestell in vorteilhafter Weise dient.

Gemäß einem weiteren Merkmal der Erfindung ist eine vom Gestell getragene Zentriereinrichtung vorgesehen, die eines der beiden Zentrierelemente bereitstellt. Es sind mithin ein Gestell einerseits und eine Zentriereinrichtung andererseits vorgesehen, wobei die Zentriereinrichtung im bestimmungsgemäßen Verwendungsfall der erfindungsgemäßen Vorrichtung am Gestell angeordnet und von diesem getragen ist. Dabei stellt die Zentriereinrichtung das eine der beiden Zentrierelementen bereit.

Es ist in diesem Zusammenhang bevorzugt, sowohl das Gestell als auch die Zentriereinrichtung möglichst verbindungssteif auszubilden. Es kommen zu diesem Zweck deshalb entsprechende Profilelemente zum Einsatz, die im Querschnitt rechteckförmig, kreisförmig oder sonst wie ausgebildet sein können. Entscheidend ist, dass im bestimmungsgemäßen Verwendungsfall die auftretenden Kräfte vom Gestell bzw. der Zentriereinrichtung möglichst verbindungssteif aufgenommen werden können, sodass die sichere Lagefixierung von Rotor und/oder Stator erreicht ist.

Gemäß einem weiteren Merkmal der Erfindung ist vorgesehen, dass die Zentriereinrichtung am Gestell auswechselbar angeordnet ist. Diese Ausgestaltung dient insbesondere einer einfachen Verwendung der Vorrichtung. Denn die auswechselbare Anordnung der Zentriereinrichtung am Gestell ermöglicht es, die Zentriereinrichtung vom Gestell wahlweise trennen zu können, beispielsweise zum Einbringen oder Ausbringen eines Elektromotors in den Aufnahmeraum zwischen den beiden Zentrierelementen. So kann beispielsweise vorgesehen sein, die Zentriereinrichtung mittels schnell lösbarer Befestigungsmittel am Gestell anzuordnen. Diese schnell lösbaren Befestigungsmittel sind im Verwendungsfall zu lösen, sodass die Zentriereinrichtung vom Gestell verwenderseitig getrennt werden kann. Der Aufnahmeraum zwischen den im Verwendungsfall einander gegenüberliegenden Zentrierelementen ist so frei zugänglich, sodass der Elektromotor beispielsweise mittels eines Krans oder dergleichen in die Vorrichtung gehoben werden kann. Sobald der Elektromotor auf der Statoraufnahme aufliegt, kann die Zentriereinrichtung verwenderseitig mit dem Gestell wieder verbunden und dort befestigt werden. Alsdann kann im Weiteren wie vorstehend bereits beschrieben verfahren werden. Sobald ein Lagertausch stattgefunden hat, kann die Zentriereinrichtung zwecks einfacher Entfernung des reparierten Elektromotors aus der Vorrichtung vom Gestell wieder getrennt und hinterher wieder an diesem angeordnet werden.

Gemäß einem weiteren Merkmal der Erfindung ist vorgesehen, dass die Zentriereinrichtung in Höhenrichtung des Gestells verfahrbar am Gestell angeordnet ist. Gemäß dieser alternativen Ausgestaltung ist die Zentriereinrichtung nicht vom Gestell trennbar ausgebildet, sondern es ist vielmehr vorgesehen, dass die Zentriereinrichtung in Relation zum Gestell verfahren werden kann, und zwar in Höhenrichtung des Gestells. Diese Ausgestaltung ist insbesondere von Vorteil, um ohne Wechsel des von der Zentriereinrichtung bereitgestellten Zentrierelements unterschiedlich groß ausgebildete Elektromotoren gleichermaßen demontieren bzw. montieren zu können. Denn durch die Höhenverstellbarkeit der Zentriereinrichtung ist eine Größenanpassung an unterschiedlich groß ausgebildete Elektromotoren ermöglicht. Zudem ist gemäß dieser Ausführungsform von Vorteil, dass die Zentriereinrichtung toleranzgleich in Relation zum Gestell ausgerichtet ist. Ein ungewollter Versatz zwischen Zentriereinrichtung und Gestell ist mithin vermieden.

Gemäß einem weiteren Merkmal der Erfindung ist vorgesehen, dass das Zentrierelement an der Zentriereinrichtung auswechselbar angeordnet ist. Durch diese alternative Ausgestaltung ist es ermöglicht, die Vorrichtung an in ihrer Größe unterschiedlich ausgebildete Elektromotoren anpassen zu können. Es ist damit eine vielseitige Einsatzmöglichkeit der erfindungsgemäßen Vorrichtung sichergestellt.

Gemäß einem weiteren Merkmal der Erfindung ist vorgesehen, dass das Zentrierelement relativ zur Zentriereinrichtung verfahrbar an der Zentriereinrichtung angeordnet ist. Hierdurch ist es ermöglicht, das Zentrierelement in Relation zur Zentriereinrichtung zu verfahren, schlussendlich, um einen im Aufnahmeraum befindlichen Rotor zwischen den beiden Zentrierelementen der ersten Fixiereinrichtung einklemmen zu können.

Gemäß einem weiteren Merkmal der Erfindung ist vorgesehen, dass die Statoraufnahme in Längsrichtung des Rotors zwischen der ersten Zentriereinrichtung und der zweiten Zentriereinrichtung angeordnet ist. Dies ermöglicht eine beidseitige Fixierung des Rotors, und zwar in Längsrichtung des Rotors eine einendseitige Fixierung einerseits und eine anderendseitige Fixierung andererseits. Dabei sind die Zentrierelemente in Längsrichtung des Rotors ausgerichtet, wobei sie den Rotor in Längsausrichtung zwischen sich einklemmen. Da die Statoraufnahme zwischen den beiden Zentrierelementen angeordnet ist, findet mit dieser eine Statorfixierung statt, die dafür Sorge trägt, dass der Stator zwischen den beiden Enden des Rotors in Längsausstreckung gehalten wird. Dabei ist eine Lagefixierung des Stators umfangsseitig des Stators vorgesehen, d. h. mit Bezug auf die Längserstreckung des Rotors in radialer Richtung. Es ist so in schon vorbeschriebener Weise in endmontierter Stellung ein Abziehen des Stators vom Rotor ermöglicht.

Gemäß einem weiteren Merkmal der Erfindung ist die Statoraufnahme eine Platte. Diese Platte ist im Gestell gehalten, und zwar vorzugsweise an ihren Ecken. Dabei ist es ferner bevorzugt, die Platte polygonal auszubilden, insbesondere rechteckförmig. In diesem Fall ergeben sich für die Platte vier Lagerstellen, nämlich je Plattenecke eine Lagerstelle.

Die Ausbildung der Statoraufnahme als Platte hat ferner den Vorteil, dass hierauf in einfacher Weise ein Elektromotor zwecks Montage bzw. Demontage abgesetzt werden kann. Dabei ruht der Stator auf der Statoraufnahme und der statoraufnahmeseitige Teil des Rotors durchragt eine hierfür vorgesehene Öffnung in der Statoraufnahme. Durch die Ausbildung der Statoraufnahme als Platte ist es ferner in einfacher Weise ermöglicht, eine Lagefixierung des Stators mittels der dafür vorgesehenen Befestigungsmittel zu erreichen. Die Platte kann nämlich über einfach ausgebildete Anschlüsse wie z. B. Gewindebohrung, Klemmspalte und/oder dergleichen Widerlager verfügen, die der Aufnahme und Anordnung entsprechender Befestigungsmittel zur Lagefixierung des Stators dienen können.

Gemäß einem weiteren Merkmal der Erfindung ist vorgesehen, dass die Statoraufnahme schienengeführt an dem Gestell angeordnet ist. Hierdurch ist in einfacher Weise eine translatorische Relativbewegung durch Verfahren realisiert. Die Statoraufnahme kann infolge der Schienenführung einfach in Relation zum Gestell und damit zur ersten Fixiereinrichtung verfahren werden, wobei aufgrund der Schienenführung zudem sichergestellt ist, dass eine ungewollte Schrägstellung vermieden ist. Dies erlaubt eine exakte Führung der Statoraufnahme ausschließlich in Rotorlängsrichtung. Konstruktiv ist damit unterstützt, dass eine ungewollte Berührung von Stator und Rotor im Montage- bzw. Demontagefall unterbleibt.

Gemäß einem weiteren Merkmal der Erfindung ist vorgesehen, dass die Statoraufnahme eine mit einem Zentrierelement zusammenwirkende Öffnung aufweist.

Diese Öffnung in der Statoraufnahme dient in schon vorbeschriebener Weise dazu, das dem Zentrierelement der Zentriereinrichtung gegenüberliegende Zentrierelement in Verbindungskontakt mit dem zugehörigen Endabschnitt des Rotors bringen zu können. Zu diesem Zweck durchragt der zentrierelementseitige Endabschnitt des Rotors die Öffnung in der Statoraufnahme.

Gemäß einem weiteren Merkmal der Erfindung ist vorgesehen, dass das Traggestell Tragschienen bereitstellt, die die Statoraufnahme in Höhenrichtung des Gestells verfahrbar aufnehmen.

Gemäß dieser besonderen Ausführungsform der Erfindung ist vorgesehen, dass für eine schienengeführte Anordnung der Statoraufnahme Tragschienen am Gestell angeordnet sind. Diese Tragschienen stützen jeweils die Statoraufnahme ab. Dabei können beispielsweise vier Tragschienen vorgesehen sein, was sich insbesondere bei einer Ausgestaltung der Statoraufnahme als rechteckförmige Platte anbietet. In diesem Fall ist jeder Plattenecke eine Tragschiene zugeordnet, und zwar unter jeweiliger Zwischenordnung eines entsprechenden Schienenlagers. Es ist so eine verbindungs- und kippfreie translatorische Bewegung der Statoraufnahme entlang der Tragschienen ermöglicht.

Gemäß einem weiteren Merkmal der Erfindung ist ein elektromotorischer Antrieb vorgesehen, der in Wirkverbindung mit der Statoraufnahme steht. Mittels dieses elektromotorischen Antriebs kann in vorteilhafter Weise ein einfaches Verfahren der Statoraufnahme realisiert werden. Dabei kommt bevorzugterweise ein Spindelantrieb zum Einsatz, d. h. es ist eine von einem Elektromotor angetriebene Spindel vorgesehen, mittels welcher eine Höhenverstellung der Statoraufnahme bewerkstelligt wird. Dabei sind vorzugsweise zwei Spindelantriebe vorgesehen, womit eine gleichmäßige Verfahrbewegung der Statoraufnahme sicher gewährleistet ist. Dabei können die beiden Spindelantriebe vorzugsweise miteinander synchronisiert sein. Natürlich ist es im Rahmen der Erfindung auch möglich, nur einen Spindelantrieb einzusetzen, was insbesondere aus Kostengründen von Vorteil ist. Die vorbeschriebene Gestellkonstruktion besitzt eine hinreichende Steifigkeit, dass auch nur ein Spindelantrieb Verwendung finden kann.

Mit der Erfindung wird ferner vorgeschlagen ein Verfahren, das folgende Verfahrensschritte aufweist. Einbringen eines zu montierenden bzw. zu demontierenden Elektromotors in die erfindungsgemäße Vorrichtung. Lagesicherung des Rotors durch Einklemmen des Rotors zwischen den beiden beabstandet voneinander angeordneten Zentrierelementen. Dies geschieht dadurch, dass bei einem in die Vorrichtung eingesetzten Elektromotor das eine Zentrierelement in Relation zum anderen Zentrierelement verfahren wird, und zwar in Rotorlängsrichtung. In einem nächsten Verfahrensschritt wird der Stator lagegesichert. Zu diesem Zweck wird der Stator an der Statoraufnahme befestigt. Hierzu dienen entsprechende Befestigungsmittel. Im Ergebnis dieser Verfahrensdurchführung stehen ein lagegesicherter Rotor einerseits und ein lagegesicherter Stator andererseits, wobei Rotor und Stator unabhängig voneinander lagegesichert sind.

In einem nächsten Verfahrensschritt sind einer Demontage entgegenstehende Anbauteile des Elektromotors zu entfernen. Hierzu gehören beispielsweise Gehäuseteile, Deckel und/oder dergleichen. Sobald dies geschehen ist, kann in einem weiteren Verfahrensschritt die Statoraufnahme in Relation zur ersten Fixiereinrichtung verfahren werden, sodass sich Stator und Rotor voneinander trennen, und zwar in Längsrichtung des Rotors.

Sobald der Rotor freigelegt ist, kann ein Lageraustausch stattfinden. Anschließend erfolgt eine Montage des Elektromotors in umgekehrter Reihenfolge.

Nach einem weiteren Merkmal der Erfindung ist zur Weiterbildung der erfindungsgemäßen Vorrichtung vorgesehen, dass zwischen der Fixiereinrichtung und dem Gestell eine, insbesondere am Gestell befestigte Justiereinrichtung angeordnet ist, wobei mit der Justiereinrichtung ein Winkel zwischen der Längsachsenrichtung des Zentrierelementes und dem Gestell einstellbar ist. Diese Justiereinrichtung, die sowohl bei nur einem Zentrierelement, bevorzugt jedoch bei beiden Zentrierelementen der Vorrichtung vorgesehen ist, ermöglicht es, die Zentrierelemente exakt auf die Statoraufnahme auszurichten. Etwaige Winkelabweichungen sowie Abweichungen in X- und Z-Richtung können nämlich den Trennungsprozess von Rotor und Stator gefährden. Durch die Größe der Vorrichtung werden aus kleinen Winkelabweichungen über die Höhe schnell zu große Abweichungen, die zu einer Gefährdung des Stators bzw. Rotors führen können.

Bevorzugt ist der Winkel über die Justiereinrichtung zwischen +/- 2 und 6°, insbesondere um +/- 4° verstellbar.

Die Justiereinrichtung weist vorzugsweise ein Gehäuse mit einer Aufnahme auf, wobei in der Aufnahme ein relativ zum Gehäuse verstellbarer Körper angeordnet ist und wobei der Körper mit der Zentrierspitze verbunden ist. Durch die Verbindung des Körpers mit der Zentrierspitze lässt sich der Winkel am freien Ende der Zentrierspitze einstellen. Die Aufnahme in dem Gehäuse ist demnach auf die Formgebung des Körpers abgestimmt, so dass der Körper formschlüssig in der Aufnahme angeordnet ist.

Vorzugsweise ist der Körper als Kugelsegment ausgebildet, wobei in der, einen runden Querschnitt aufweisenden Aufnahme zwei Kugelpfannen angeordnet sind. Der Körper ist zwischen den Kugelpfannen gehalten, so dass der Körper in den beiden Kugelpfannen gelagert und relativ zu den Kugelpfannen verstellbar ist.

Ergänzend weist die erfindungsgemäße Vorrichtung eine Einstellvorrichtung auf, mit der der Winkel der Justiereinrichtung einstellbar ist. Vorzugsweise weist die Einstellvorrichtung Stellschrauben auf, die zur Aufnahme und zum Körper tangential verlaufend ausgerichtet sind. Es hat sich diesbezüglich als vorteilhaft erwiesen, dass jeweils vier Stellschrauben in einer von zwei Horizontalebenen angeordnet sind, wobei die Stellschrauben der Horizontalebene in gleichmäßigen Winkelabständen von jeweils 90° zueinander angeordnet sind. Die Horizontalebenen befinden sich im Wesentlichen im Bereich der Kugelpfannen und des Körpers, so dass die Stellschrauben mit ihren Enden im Bereich der beabstandet angeordneten Horizontalebenen mit dem Körper in Kontakt bringbar sind und somit eine Einstellung des Körpers in der Aufnahme über die Stellschrauben ermöglicht ist. Die oberen Stellschrauben sind hierbei derart angeordnet, dass sie bevorzugt auf die Kugelpfanne wirken, während die unteren Stellschrauben bevorzugt auf den Körper wirken. Hierbei sind die unteren Stellschrauben die Stellschrauben, die näher an der Zentrierspitze angeordnet sind. Demnach ist es konstruktiv bei einer oberen Justiereinheit gemäß der voranstehenden Darstellung, während bei einer unteren Zentriereinheit die unteren Stellschrauben auf die Kugelpfanne und die oberen Stellschrauben auf den Körper wirken.

Weiterhin ist eine Feststelleinrichtung vorgesehen, mit der der Winkel der Justiereinrichtung fixierbar ist. Nachdem der Körper in der Aufnahme über die Stellschrauben feinjustiert ist, so dass sich der gewünschte Winkel am Ende des Zentrierelementes einstellt, wird der Körper in der Aufnahme durch die Feststelleinrichtung fixiert. Hierbei kann die Feststelleinrichtung als Spannmutter ausgebildet sein, die in Längsachsenrichtung des Gehäuses relativ zum Körper verstell- und fixierbar ist. Durch die Spannmutter wird der Körper in der Aufnahme gegen eine Kugelpfanne oder eine Innenfläche der Aufnahme gepresst, so dass der Körper über die Reibung in der Aufnahme, insbesondere in der Kugelpfanne fixiert ist.

Neben den voranstehend beschriebenen Merkmalen der Vorrichtung bezieht sich die Erfindung auch auf eine Justiereinrichtung für eine voranstehend beschriebene Vorrichtung. Um die voranstehend genannte Aufgabe zu lösen ist bei einer erfindungsgemäßen Justiereinrichtung vorgesehen, dass mit dieser ein Winkel zwischen einer Längsachsenrichtung eines Zentrierelements der Vorrichtung und dem Gestell einstellbar ist.

Zu diesem Zweck weist die Justiereinrichtung ein Gehäuse mit einer Aufnahme auf, wobei in der Aufnahme ein relativ zum Gehäuse verstellbarer Körper angeordnet ist und wobei der Körper mit der Zentrierspitze verbunden ist. Über die Justiereinrichtung kann die Zentrierspitze bevorzugt hinsichtlich eines Winkels von +/- 2 bis +/- 6° eingestellt werden.

Des Weiteren weist die Justiereinrichtung eine Einstellvorrichtung auf, die eine Feineinstellung des Winkels der Zentrierspitze ermöglicht. Eine Einstellung über die Zentrierspitze ist durch die Einstellvorrichtung nicht erforderlich. Vorzugsweise weist die Einstellvorrichtung Stellschrauben auf, die zur Aufnahme und zum Körper tangential verlaufend ausgerichtet sind.

Es hat sich nach einem weiteren Merkmal der Erfindung als vorteilhaft erwiesen, die Justiereinrichtung dadurch weiterzubilden, dass jeweils vier Stellschrauben in zumindest einer von zwei Horizontalebenen angeordnet sind, wobei die Stellschrauben der Horizontalebene in gleichmäßigen Winkelabständen von jeweils 90° zueinander angeordnet sind. Über die Stellschrauben in den beiden Horizontalebenen kann der Körper in der Aufnahme relativ zum Gehäuse derart verstellt werden, dass die Zentrierspitze in die bestimmungsgemäße Winkelstellung überführt wird. Hierdurch kann auch die Konzentrizität der beiden oben und unten im Gestell angeordneten Zentrierspitzen zueinander exakter eingestellt werden.

Schließlich ist bei einer erfindungsgemäßen Justiereinrichtung vorgesehen, dass über eine Feststelleinrichtung der eingestellte Winkel fixierbar ist. Die Feststelleinrichtung kann als Spannmutter ausgebildet sein, die in Längsachsenrichtung des Gehäuses relativ zum Körper verstell- und fixierbar ist. Durch die Spannmutter wird der Körper in der Aufnahme dadurch verspannt, dass der Körper beispielsweise gegen eine Kugelpfanne gepresst wird.

Weitere Merkmale und Vorteile der Erfindung ergeben sich aus der nachfolgenden Beschreibung anhand der Figuren. Dabei zeigen
- Fig. 1: in einer schematischen Perspektivdarstellung eine erfindungsgemäße Vorrichtung gemäß einer ersten Ausführungsform;
- Fig. 2: in einer weiteren schematischen Perspektivansicht die erfindungsgemäße Vorrichtung gemäß der ersten Ausführungsform;
- Fig. 3: in einer schematischen Seitenansicht die erfindungsgemäße Vorrichtung gemäß der ersten Ausführungsform;
- Fig. 4: in einer schematischen Draufsicht von unten die erfindungsgemäße Vorrichtung nach Fig .3;
- Fig. 5: in einer schematischen Draufsicht von oben die erfindungsgemäße Vorrichtung nach Fig. 3;
- Fig. 6: in einer schematischen Perspektivdarstellung die erfindungsgemäße Vorrichtung gemäß einer zweiten Ausführungsform;
- Fig. 7: in einer weiteren schematischen Perspektivansicht die erfindungsgemäße Vorrichtung gemäß der zweiten Ausführungsform;
- Fig. 8: in einer schematischen Perspektivansicht von unten die erfindungsgemäße Vorrichtung nach Fig. 7;
- Fig. 9: in einer schematischen Seitenansicht die erfindungsgemäße Vorrichtung nach Fig. 7;
- Fig. 10: in einer schematischen Seitenansicht die erfindungsgemäße Vorrichtung nach Fig. 9 gemäß Blickrichtung 10 nach Fig. 9;
- Fig. 11: in einer schematischen Ansicht von unten die erfindungsgemäße Vorrichtung nach Fig. 9;
- Fig. 12: in einer schematischen Draufsicht von oben die erfindungsgemäße Vorrichtung nach Fig. 9;
- Fig. 13: in einer ersten Seitenansicht die erfindungsgemäße Vorrichtung mit einer Justiereinrichtung;
- Fig. 14: in einer zweiten Seitenansicht die erfindungsgemäße Vorrichtung mit der Justiereinrichtung und
- Fig. 15: eine geschnitten dargestellte Detailansicht der Justiereinrichtung gemäß dem Kreis Z in Figur 13.

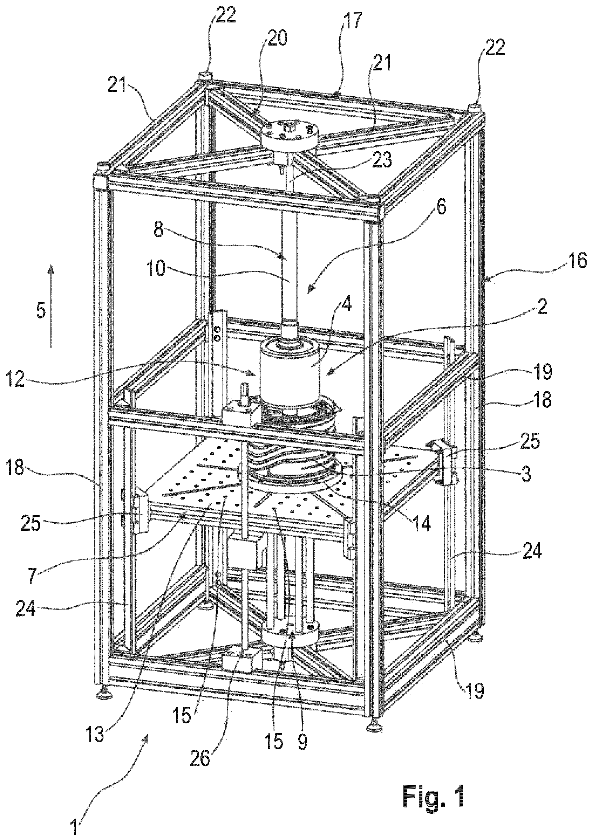

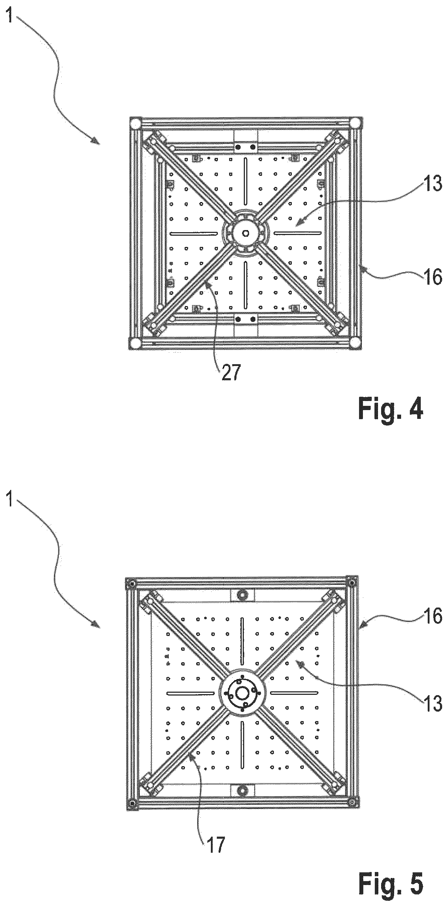

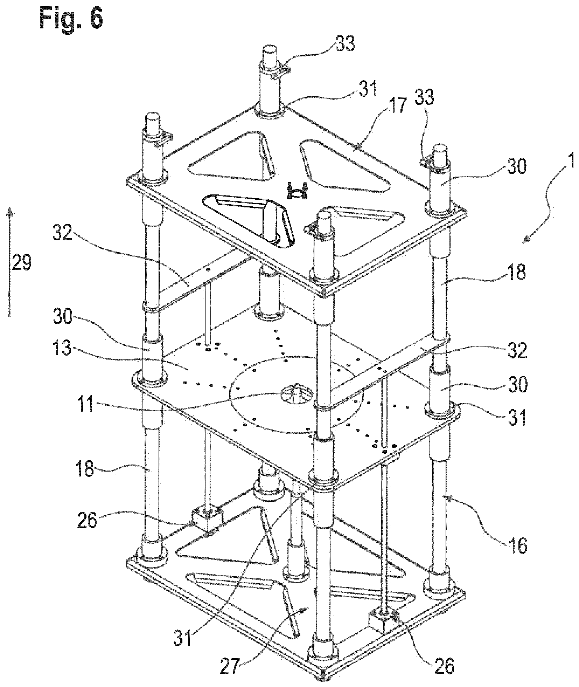

Die Fig. 1 bis 12 lassen in einer Zusammenschau die erfindungsgemäße Vorrichtung 1 zur Demontage eines einen Rotor 4 und einen Stator 3 aufweisenden Elektromotors 2 erkennen, wobei die Fig. 1 bis 5 eine erste Ausführungsform und die Fig. 6 bis 12 eine zweite Ausführungsform zeigen.

Die erfindungsgemäße Vorrichtung 1 dient der Demontage bzw. Montage eines Elektromotors 2, wie beispielhaft in Fig. 1 dargestellt ist. Dabei dient die Vorrichtung 1 konkret dazu, den Stator 3 vom Rotor 4 zu lösen, d. h. zu trennen, ohne dass dabei die Gefahr besteht, dass sich Rotor 4 und Stator 3 einander berühren. In Fig. 1 ist beispielhaft die mittels der erfindungsgemäßen Vorrichtung 1 erreichte Trennung von Stator 3 und Rotor 4 gezeigt.

Die erfindungsgemäße Vorrichtung 1 verfügt über eine erste Fixiereinrichtung 6 und eine zweite Fixiereinrichtung 7. Dabei dient die erste Fixiereinrichtung 6 zur Lagesicherung des Rotors 4, wohingegen die zweite Fixiereinrichtung 7 der Lagesicherung des Stators 3 dient.

Die erste Fixiereinrichtung 6, d. h. die Fixiereinrichtung 6 für den Rotor 3 verfügt über ein erstes Zentrierelement 8 einerseits und ein zweites Zentrierelement 9 andererseits. Diese beiden Zentrierelemente 8 und 9 bilden zwischen sich einen Aufnahmeraum 12 aus, der der Aufnahme des Rotors 4 in Längsausrichtung dient, wie in Fig. 1 dargestellt. Die beiden Zentrierelemente 8 und 9 sind mithin unter Ausbildung des Aufnahmeraums 12 zur Aufnahme des Rotors 4 in Längsausrichtung einander gegenüberliegend angeordnet.

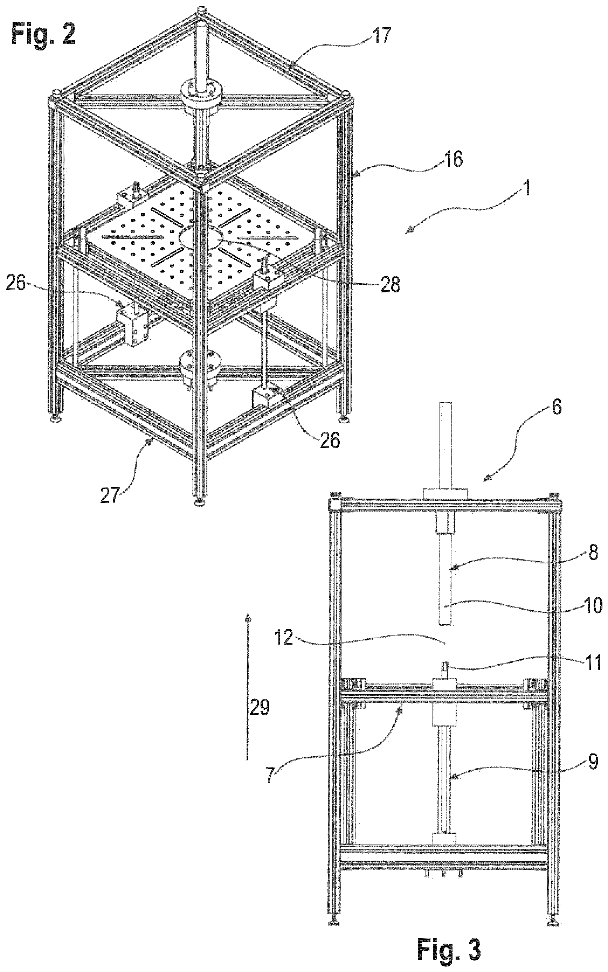

Ein jedes Zentrierelement 8 bzw. 9 stellt eine Zentrierspitze 10 bzw. 11 bereit, wie sich insbesondere auch aus der Darstellung nach Fig. 3 ergibt. Im Montage- bzw. Demontagefall ist der Rotor 4 des Elektromotors 2 zwischen den beiden Zentrierspitzen 10 und 11 lagesicher gehalten, was insbesondere die Darstellung nach Fig. 1 erkennen lässt.

Die zweite Fixiereinrichtung 7, d. h. die Fixiereinrichtung 7 für den Stator 3 verfügt über eine Statoraufnahme 13. Im gezeigten Ausführungsbeispiel ist diese Statoraufnahme 13 als Platte ausgebildet. Ferner verfügt die zweite Fixiereinrichtung 7 über Befestigungsmittel 14. Bei diesen Befestigungsmitteln 14 kann es sich beispielsweise um Schrauben handeln, die mit von der Statoraufnahme 13 bereitgestellten Gewindebohrungen 15 zusammenwirken.

Die beiden Zentrierelemente 8 und 9 sind mittels eines Gestells 16 gegenüber einander abgestützt. Dabei verfügt das Gestell 16 im gezeigten Ausführungsbeispiel über Längsholme 18 einerseits und Querholme 19 andererseits. Diese Holme 18 und 19 sind gemäß dem ersten Ausführungsbeispiel nach den Fig. 1 bis 5 im Querschnitt rechteckförmig ausgebildet. Gemäß dem zweiten Ausführungsbeispiel nach den Fig. 6 bis 12 sind diese Holme 18 und 19 im Querschnitt kreisförmig ausgebildet. Letztere Ausgestaltung ist dabei bevorzugt, weil hierdurch in besonderer Weise Steifigkeit und Verwindungsstärke des Gestells 16 erreicht wird.

Das Gestell 16 stellt einen Gestellfuß 27 bereit. Dieser trägt das zweite Zentrierelement 9 der ersten Fixiereinrichtung 6. Dem Gestellfuß 27 in Höhenrichtung 29 des Gestells 16 gegenüberliegend ist eine Zentriereinrichtung 17 vorgesehen. Diese ist aus einzelnen Streben 21 gebildet und stellt eine Trageinheit 20 für das erste Zentrierelement 8 bereit. Die gesamte Zentriereinrichtung 17 ist austauschbar am Gestell 16 angeordnet, zu welchem Zweck entsprechende Schraubenanordnungen 22 vorgesehen sind.

Die Zentrierspitze 10 des ersten Zentrierelements 8 ist von einer Spindel 23 getragen. Es ist so ermöglicht, die Zentrierspitze 10 in Längsrichtung 5 des Rotors 4 zu verfahren.

Die Statoraufnahme 13 ist im gezeigten Ausführungsbeispiel nach den Fig. 1 bis 5 von vier Tragschienen 24 getragen, und zwar unter jeweiliger Zwischenordnung eines Halters 25. Diese Anordnung gestattet eine translatorische Verfahrbewegung der Statoraufnahme 13 in Höhenrichtung 29 des Gestells 16, d. h. in Längsrichtung 5 des Rotors 4.

Wie sich insbesondere aus der Darstellung nach Fig. 2 ergibt, ist die Statoraufnahme 13 mit einer Öffnung 28 ausgerüstet. Durch diese Öffnung 28 greift im Montage- bzw. Demontagefall der gestellfußseitige Abschnitt des Rotors 4 bzw. je nach Stellung der Statoraufnahme 13 die Zentrierspitze 11.

Die erfindungsgemäße Ausgestaltung gemäß des Ausführungsbeispiels nach den Fig. 1 bis 5 erlaubt eine Verfahrensdurchführung wie folgt. Die Zentriereinrichtung 17 wird vom Gestell 16 getrennt. Dieses ist alsdann von oben aus zugänglich. Mittels eines Krans wird ein zu demontierender Elektromotor 2 von oben in das Gestell 16 eingesetzt, und zwar so weit, bis der Elektromotor 2 mit seinem Stator 3 auf der Statoraufnahme 13 zu liegen kommt. Alsdann wird die Zentriereinrichtung 17 am Gestell 16 wieder befestigt. Es wird alsdann die Zentrierspitze 10 in Relation zum Rotor 4 so weit verfahren, bis der Rotor 4 zwischen den beiden Zentrierspitzen 10 und 11 lagesicher eingespannt ist. Alsdann wird der Stator 3 auf der Statoraufnahme 13 befestigt, und zwar mittels entsprechender Befestigungsmittel. In einem letzten Verfahrensschritt wird alsdann die Statoraufnahme 13 in Höhenrichtung 29 des Gestells 16 nach unten verfahren, welche Position in Fig. 1 dargestellt ist. Infolge dieser Verfahrbewegung wird der lagegesicherte Stator 3 in Höhenrichtung in Relation zum Rotor 4 nach unten verfahren, wodurch Stator 3 und Rotor 4 voneinander getrennt werden.

Für eine Verfahrbewegung der Statoraufnahme 13 dient ein Spindelantrieb 26, wobei zwei solcher Spindelantriebe 26 vorgesehen sind, wie dies insbesondere die Darstellung nach Fig. 2 erkennen lässt.

Die Fig. 6 bis 12 zeigen ein zweites Ausführungsbeispiel. Im Unterschied zum ersten Ausführungsbeispiel sind gestellseitig Längsholme 18 vorgesehen, die im Querschnitt kreisförmig ausgebildet sind. Hierdurch wird die Gesamtsteifigkeit des Gestells 16 in vorteilhafter Weise erhöht. Ein weiterer Unterschied liegt darin, dass die Zentriereinrichtung 17 in Höhenrichtung 29 verfahrbar ausgebildet ist. Dies vereinfacht ein Einklemmen eines Rotors 4 zwischen den beiden Zentrierelementen 8 und 9 und macht es zudem in vorteilhafter Weise möglich, für unterschiedlich ausgebildete Elektromotoren 2 ein und dieselben Zentrierelemente 8 bzw. 9 einsetzen zu können.

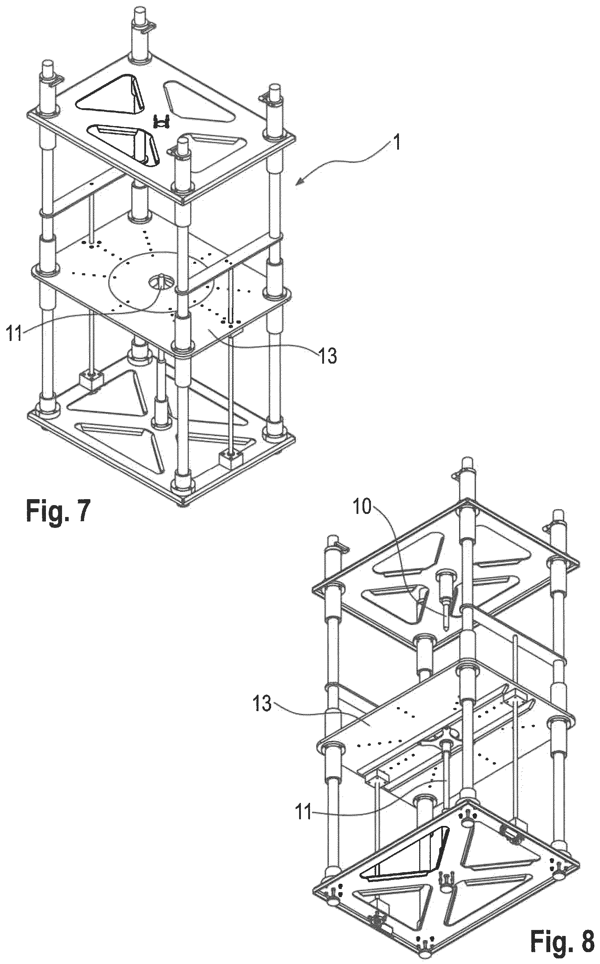

Die relative Verfahrbarkeit der Statoraufnahme 13 zum Gestell 16 einerseits und der Zentriereinrichtung 17 zum Gestell 16 andererseits ist im gezeigten Ausführungsbeispiel dadurch realisiert, dass die Statoraufnahme 13 mit Linearlagern 30 ausgerüstet ist. Dabei verfügen die Linearlager 30 jeweils über einen Hülsenkörper und einen Flansch 31. Der Hülsenkörper eines jeden Linearlagers 31 umgreift den zugehörigen Längsholm 18 des Gestells 16 und die Statoraufnahme 13 stützt sich unter Zwischenordnung des Flansches 31 hieran ab, wie dies insbesondere die Fig. 6 und 8 erkennen lassen.

Zwecks elektromotorischer Höhenverstellung der Statoraufnahme 13 sind im gezeigten Ausführungsbeispiel zwei Spindelantriebe 26 vorgesehen, wobei eine Abstützung der jeweiligen Spindel am Gestellfuß 27 einerseits und einer zugehörigen Strebe 32 andererseits stattfindet.

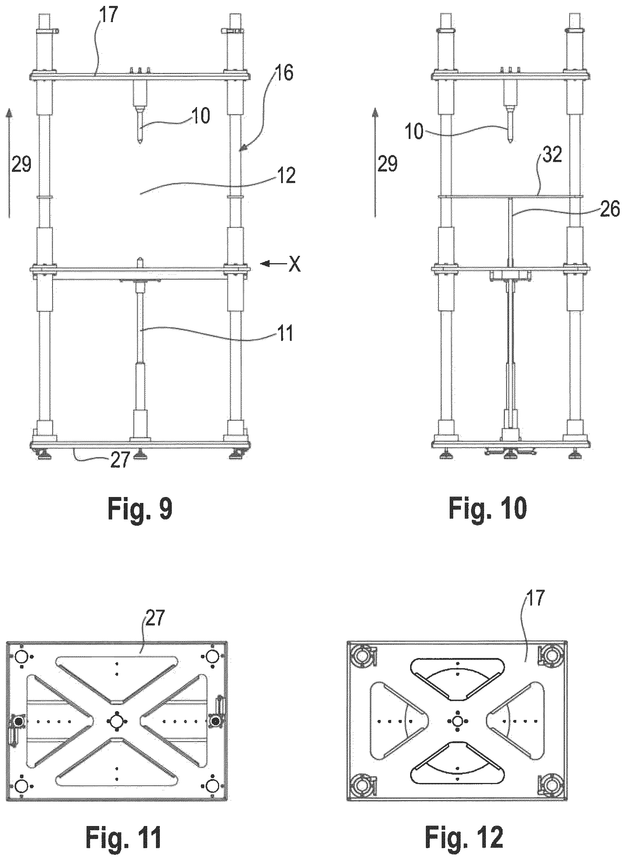

Wie sich insbesondere aus einer Zusammenschau der Fig. 8 und 9 ergibt, ist die Zentrierspitze 11 in Längsrichtung 29 des Gestells 16 vergleichsweise lang ausgebildet. Um ein ungewolltes Verbiegen der Zentrierspitze 11 im bestimmungsgemäßen Verwendungsfall zu vermeiden, ist unterhalb der als Platte 13 ausgebildeten Statoraufnahme 13 eine Längsführung für die Zentrierspitze 11 ausgebildet, die ein zentrisches Hindurchführen der Zentrierspitze 11 durch die von der Statoraufnahme 13 bereitgestellte Öffnung 28 sicherstellt. Dieser Sachzusammenhang ergibt sich insbesondere aus einer Zusammenschau der Fig. 8 und 10.

Eine Montage bzw. Demontage eines Elektromotors 2 kann mit der erfindungsgemäßen Vorrichtung gemäß der Fig. 6 bis 12 in gleicher Weise stattfinden, wie vorstehend bereits anhand des Ausführungsbeispiels gemäß der Fig. 1 bis 5 beschrieben, allerdings mit dem Unterschied, dass zur Einklemmung des Rotors 4 die Zentriereinrichtung 17 höhenverfahren wird.

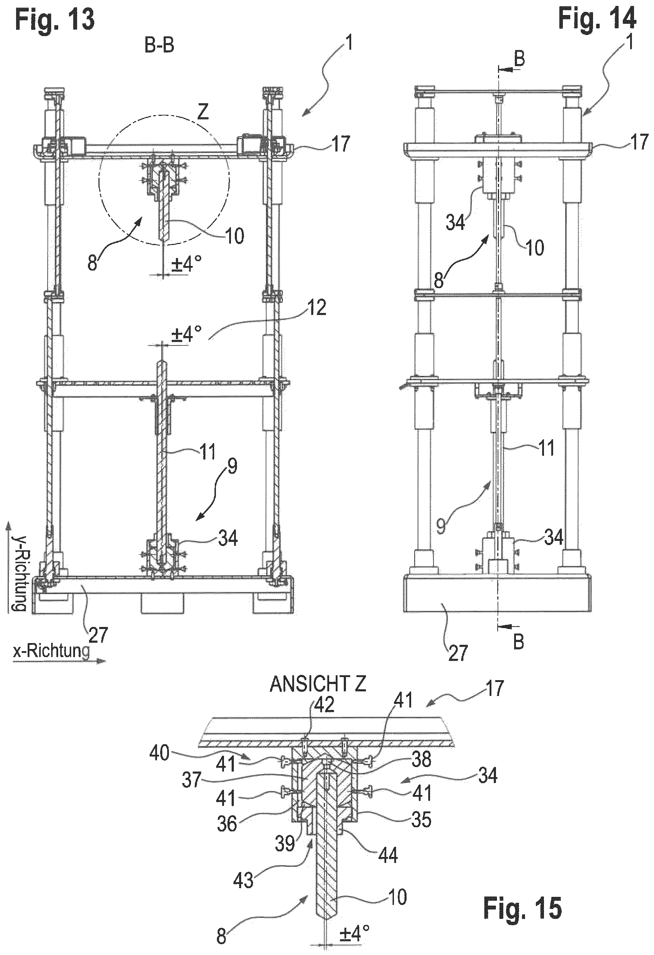

In den Figuren 13 bis 15 ist eine weitere Ausführungsform einer Vorrichtung 1 dargestellt. Ergänzend zu den bereits im Hinblick auf die Figuren 1 bis 12 beschriebenen konstruktiven Elementen weist die Vorrichtung 1 gemäß den Figuren 13 bis 15 im Bereich der Zentrierspitzen 10, 11 jeweils eine Justiereinrichtung 34 auf. Die Justiereinrichtung 34 ist zum einen mit der Zentriereinrichtung 17 und zum anderem mit der Zentrierspitze 10 bzw. zum einen mit dem Gestellfuß 27 und der Zentrierspitze 11 verbunden. Über die Justiereinrichtung, die nachfolgend noch detailliert beschrieben wird, kann die jeweilige Zentrierspitze 10, 11 hinsichtlich ihrer Ausrichtung in der dargestellten X-Richtung um +/- 4° relativ zur vertikalen Ausrichtung der Zentrierspitze 10, 11 verschwenkt werden.

Die konstruktive Ausgestaltung der Justiereinrichtung 34 ist der Figur 15 zu entnehmen. Die Justiereinrichtung 34 weist ein Gehäuse 35 mit einer Aufnahme 36 auf. In der Aufnahme 36 ist ein relativ zum Gehäuse 35 verstellbarer Körper 37 angeordnet. Der Körper 37 ist mit der Zentrierspitze 10 verbunden. Zu diesem Zweck weist die Zentrierspitze 10 in einer im Körper 37 angeordneten Stirnfläche eine Bohrung auf, in die eine Schraube 38 eingreift. Die Zentrierspitze 10 ist in einer Öffnung des Körpers 37 geführt und mit dem Körper 37 verschraubt.

Der Körper 37 ist als Kugelsegment ausgebildet und zwischen zwei Kugelpfannen 39 angeordnet. Die Aufnahme 36 weist einen runden Querschnitt auf und ist kalottenförmig ausgebildet. Der Körper 37 ist zwischen den Kugelpfannen 39 gehalten.

Des Weiteren ist eine Einstellvorrichtung 40 vorgesehen, mit der der Winkel der Justiereinrichtung 34 einstellbar ist. Die Einstellvorrichtung 40 weist Stellschrauben 41 auf, die zur Aufnahme 36 und zum Körper 37 tangential verlaufend ausgerichtet sind. Jeweils vier Stellschrauben 41 sind in einer Horizontalebene angeordnet, wobei insgesamt acht Stellschrauben 41 vorgesehen sind, die mit ihren Enden auf die Außenfläche des Körpers 37 und auf die Kugelpfannen 38 einwirken und über die Feinjustierung der Stellschrauben 41 den Körper 37 innerhalb der Aufnahme 36 verstellen. Die beiden Horizontalebenen sind beabstandet zueinander angeordnet.

Es ist ferner erkennbar, dass das Gehäuse 35 über Schrauben 42 mit der Zentriereinrichtung 17 verschraubt ist.

Die Stellschrauben 41 durchgreifen Bohrungen im Gehäuse 35, die mit einem Innengewinde ausgebildet sind. Die Stellschrauben 41 sind als Rändelschrauben ausgebildet.

Die in Fig. 15 im oberen Bereich des Gehäuses 35 angeordneten Stellschrauben 41 und damit in der oberen Horizontalebene liegenden Stellschrauben 41 sind für die Ausrichtung der Zentrierspitze 10 in X- und Z-Richtung vorgesehen, während die in Fig. 15 in der unteren Horizontalebene angeordneten Stellschrauben 41 für die exakte Rechtwinkligkeit der Zentrierspitze 10 zur Statoraufnahme 13 dienen.

Gleiches gilt für die untere Zentrierspitze 11 hinsichtlich der diesbezüglich unteren Justiereinrichtung 34 in den Figuren 13 und 14.

Nachdem die Zentrierspitze 10 bzw. die Zentrierspitze 11 über die Justiereinrichtung 34 in die vorbestimmte Position eingestellt ist, wird der Körper 37 über eine Feststelleinrichtung 43 in einer Position fixiert. Zu diesem Zweck weist die Feststelleinrichtung 43 eine Spannmutter 44 auf, die in Längsachsenrichtung des Gehäuses 35 bzw. der Zentrierspitze 10, 11 relativ zum Körper 37 verstell- und fixierbar ist. Auf der Spannmutter 44 aufliegend befindet sich ein Kugelpfanne 39, so dass über die Spannmutter 44 die Kugelpfanne 39 in Richtung auf den Körper 37 zu bewegbar ist.

Die in Fig. 15 dargestellte Justiereinrichtung 34 ist auch für andere Ausgestaltungen einer Vorrichtung zur Demontage eines einen Rotor und einen Stator aufweisenden Elektromotors geeignet. Dem Grunde nach kann die Justiereinrichtung 34 als separat handelbares Konstruktionselement bei üblichen Vorrichtungen ergänzend vorgesehen sein, sofern eine Notwendigkeit besteht, die Zentrierspitzen 10, 11 in ihrer Winkellage feinzujustieren.

### Bezugszeichen

- 1: Vorrichtung
- 2: Elektromotor
- 3: Stator
- 4: Rotor
- 5: Längsrichtung (Rotor)
- 6: erste Fixiereinrichtung
- 7: zweite Fixiereinrichtung
- 8: erstes Zentrierelement
- 9: zweites Zentrierelement
- 10: Zentrierspitze
- 11: Zentrierspitze
- 12: Aufnahmeraum
- 13: Statoraufnahme
- 14: Befestigungsmittel
- 15: Gewindebohrung
- 16: Gestell
- 17: Zentriereinrichtung
- 18: Längsholm
- 19: Querholm
- 20: Trageinheit
- 21: Strebe
- 22: Schraubenanordnung
- 23: Spindel
- 24: Tragschiene
- 25: Halter
- 26: Spindelantrieb
- 27: Gestellfuß
- 28: Öffnung
- 29: Höhenrichtung
- 30: Lager
- 31: Flansch
- 32: Strebe
- 33: Klemmring
- 34: Justiereinrichtung
- 35: Gehäuse
- 36: Aufnahme
- 37: Körper
- 38: Schraube
- 39: Kugelpfanne
- 40: Einstellvorrichtung
- 41: Stellschraube
- 42: Schraube
- 43: Feststelleinrichtung
- 44: Spannmutter

## Patentansprüche

1. Vorrichtung zur Demontage eines einen Rotor und einen Stator aufweisenden Elektromotors, mit einer ersten Fixiereinrichtung (6) für den Rotor (4), die ein erstes Zentrierelement (8) und ein zweites Zentrierelement (9) aufweist, wobei die Zentrierelemente (8, 9) unter Ausbildung eines Aufnahmeraums (12) zur Aufnahme des Rotors (4) in Längsausrichtung einander gegenüberliegend angeordnet und dazu eingerichtet sind, den Rotor (4) positionssicher zwischen sich aufzunehmen, und mit einer zweiten Fixiereinrichtung (7) für den Stator (3), die eine Statoraufnahme (13) und Befestigungsmittel (14) zur Positionssicherung des Stators (3) relativ zur Statoraufnahme (13) aufweist, wobei die Statoraufnahme (13) in Relation zur ersten Fixiereinrichtung (6) in Höhenrichtung (29) eines Gestells (16) und somit in Rotorlängsrichtung (5) translatorisch bewegbar ausgebildet ist.

2. Vorrichtung nach Anspruch 1, **dadurch gekennzeichnet, dass** das Gestell (16) die beiden Zentrierelemente (8, 9) gegenüber einander abstützt.

3. Vorrichtung nach Anspruch 2, **gekennzeichnet durch** eine vom Gestell (16) getragene Zentriereinrichtung (17), die eines der beiden Zentrierelemente (8, 9) bereitstellt.

4. Vorrichtung nach Anspruch 3, **dadurch gekennzeichnet, dass** die Zentriereinrichtung (17) am Gestell (16) auswechselbar angeordnet ist.

5. Vorrichtung nach Anspruch 3 oder 4, **dadurch gekennzeichnet, dass** die Zentriereinrichtung (17) in Höhenrichtung (29) des Gestells (16) verfahrbar am Gestell (16) angeordnet ist.

6. Vorrichtung nach einem der vorhergehenden Ansprüche 3 bis 5, **dadurch gekennzeichnet, dass** das Zentrierelement (8) an der Zentriereinrichtung (17) auswechselbar angeordnet ist.

7. Vorrichtung nach einem der vorhergehenden Ansprüche 3 bis 6, **dadurch gekennzeichnet, dass** das Zentrierelement (8) relativ zur Zentriereinrichtung (17) verfahrbar an der Zentriereinrichtung (17) angeordnet ist.

8. Vorrichtung nach einem der vorhergehenden Ansprüche, **dadurch gekennzeichnet, dass** die Statoraufnahme (13) in Längsrichtung (5) des Rotors (4) zwischen erstem Zentrierelement (8) und zweitem Zentrierelement (9) angeordnet ist.

9. Vorrichtung nach einem der vorhergehenden Ansprüche, **dadurch gekennzeichnet, dass** die Statoraufnahme (13) eine Platte ist.

10. Vorrichtung nach einem der vorhergehenden Ansprüche, **dadurch gekennzeichnet, dass** die Statoraufnahme (13) schienengeführt an dem Gestell (16) angeordnet ist.

11. Vorrichtung nach einem der vorhergehenden Ansprüche, **dadurch gekennzeichnet, dass** die Statoraufnahme (13) eine mit einem Zentrierelement (11) zusammenwirkende Öffnung (28) aufweist.

12. Vorrichtung nach einem der vorhergehenden Ansprüche 2 bis 11, **dadurch gekennzeichnet, dass** das Gestell (16) Tragschienen (24) bereitstellt, die die Statoraufnahme (13) in Höhenrichtung (29) des Gestells (16) verfahrbar aufnehmen.

13. Vorrichtung nach einem der vorhergehenden Ansprüche 2 bis 11, **dadurch gekennzeichnet, dass** die Tragschienen (24) durch Längsholme (18) des Gestells (16) gebildet sind.

14. Vorrichtung nach einem der vorhergehenden Ansprüche 2 bis 13, **dadurch gekennzeichnet, dass** das Gestell (16) einen der Zentriereinrichtung (17) gegenüberliegenden Gestellfuß (27) aufweist, der das andere Zentrierelement (9) trägt.

15. Vorrichtung nach einem der vorhergehenden Ansprüche, **gekennzeichnet durch** einen elektromotorischen Antrieb, der in Wirkverbindung mit der Statoraufnahme (13) steht.

16. Vorrichtung nach einem der vorhergehenden Ansprüche, **dadurch gekennzeichnet, dass** zwischen der Fixiereinrichtung (6, 7) und dem Gestell (16) eine, insbesondere am Gestell (16) und/oder der Zentriereinrichtung (17) befestigte Justiereinrichtung (34) angeordnet ist, wobei mit der Justiereinrichtung (34) ein Winkel zwischen der Längsachsenrichtung des Zentrierelements (8, 9) und dem Gestell (16) und/oder der Zentriereinrichtung (17) einstellbar ist.

17. Vorrichtung nach Anspruch 16, **dadurch gekennzeichnet, dass** der Winkel über die Justiereinrichtung (34) zwischen +/- 2 und 6°, insbesondere um +/- 4° verstellbar ist.

18. Vorrichtung nach Anspruch 16 oder 17, **dadurch gekennzeichnet, dass** die Justiereinrichtung (34) ein Gehäuse (35) mit einer Aufnahme (36) aufweist, wobei in der Aufnahme (36) ein relativ zum Gehäuse (35) verstellbarer Körper (37) angeordnet ist und wobei der Körper (37) mit der Zentrierspitze (10, 11) verbunden ist.

19. Vorrichtung nach Anspruch 18, **dadurch gekennzeichnet, dass** der Körper (37) als Kugelsegment ausgebildet ist, wobei in der, einen runden Querschnitt aufweisenden Aufnahme (36) zwei Kugelpfannen (39) angeordnet sind, wobei der Körper (37) zwischen den Kugelpfannen (39) gehalten ist.

20. Vorrichtung nach einem der Ansprüche 16 bis 19, **gekennzeichnet durch** eine Einstellvorrichtung (40), mit der der Winkel der Zentrierspitze (10, 11) mit Hilfe der Justiereinrichtung (34) einstellbar ist.

21. Vorrichtung nach Anspruch 20, **dadurch gekennzeichnet, dass** die Einstellvorrichtung (40) Stellschrauben (41) aufweist, die zur Aufnahme (36) und zum Körper (37) tangential verlaufend ausgerichtet sind.

22. Vorrichtung nach Anspruch 21, **dadurch gekennzeichnet, dass** jeweils vier Stellschrauben (41) in einer von zwei Horizontalebenen angeordnet sind, wobei die Stellschrauben (41) der Horizontalebene in gleichmäßigen Winkelabständen von jeweils 90° zueinander angeordnet sind.

23. Vorrichtung nach einem der Anspruch 16 bis 22, **gekennzeichnet durch** eine Feststelleinrichtung (43), mit der der Winkel der Zentrierspitze (10, 11) mit Hilfe der Justiereinrichtung (34) fixierbar ist.

24. Vorrichtung nach Anspruch 23, **dadurch gekennzeichnet, dass** die Feststelleinrichtung (43) als Spannmutter (44) ausgebildet ist, die in Längsachsenrichtung des Gehäuses (35) relativ zum Körper (37) verstell- und fixierbar ist.

25. Justiereinrichtung für eine Vorrichtung (1) zur Demontage eines einen Rotor und einen Stator aufweisenden Elektromotors, die zwischen einer Fixiereinrichtung (6, 7) und dem Gestell (16) und/oder der Zentriereinrichtung (17) der Vorrichtung (1), insbesondere am Gestell (16) und/oder der Zentriereinrichtung (17) der Vorrichtung (1) befestigbar ist, und mit der ein Winkel zwischen einer Längsachsenrichtung eines Zentrierelements (8, 9) der Vorrichtung (1) und dem Gestell (16) und/oder der Zentriereinrichtung (17) der Vorrichtung (1) einstellbar ist.

26. Justiereinrichtung nach Anspruch 25, **gekennzeichnet durch** ein Gehäuse (35) mit einer Aufnahme (36), wobei in der Aufnahme (36) ein relativ zum Gehäuse (35) verstellbarer Körper (37) angeordnet ist und wobei der Körper (37) mit einer Zentrierspitze (10, 11) verbunden ist.

27. Justiereinrichtung nach Anspruch 26, **dadurch gekennzeichnet, dass** der Körper (37) als Kugelsegment ausgebildet ist und dass in der, einen runden Querschnitt aufweisenden Aufnahme (36) zwei Kugelpfannen (39) angeordnet sind, wobei der Körper (37) zwischen den Kugelpfannen (39) gehalten ist.

28. Justiereinrichtung nach einem der Ansprüche 25 bis 27, **gekennzeichnet durch** eine Einstellvorrichtung (40), mit der der Winkel der Zentrierspitze (10, 11) einstellbar ist.

29. Justiereinrichtung nach Anspruch 28, **dadurch gekennzeichnet, dass** die Einstellvorrichtung (40) Stellschrauben (41) aufweist, die zur Aufnahme (36) und zum Körper (37) tangential verlaufend ausgerichtet sind.

30. Justiereinrichtung nach Anspruch 29, **dadurch gekennzeichnet, dass** jeweils vier Stellschrauben (41) in einer von zwei Horizontalebenen angeordnet sind, wobei die Stellschrauben (41) der Horizontalebene in gleichmäßigen Winkelabständen von jeweils 90° zueinander angeordnet sind.

31. Justiereinrichtung nach einem der Anspruch 25 bis 30, **gekennzeichnet durch** eine Feststelleinrichtung (43), mit der insbesondere der Winkel der Zentrierspitze (10, 11) fixierbar ist.

32. Justiereinrichtung nach Anspruch 31, **dadurch gekennzeichnet, dass** die Feststelleinrichtung (43) als Spannmutter (44) ausgebildet ist, die in Längsachsenrichtung des Gehäuses (35) relativ zum Körper (37) verstell- und fixierbar ist.
